# EUROPÄISCHE PATENTSCHRIFT

(11) **EP 4 283 517 B1**
(45) Veröffentlichungstag und Bekanntmachung des Hinweises auf die Patenterteilung: **01.04.2026**
(21) Anmeldenummer: 23173293.4
(22) Anmeldetag: 15.05.2023
(51) Int. Cl.: G06K 19/06, G06K 1/12, G06K 7/14

(54) **VERFAHREN ZUM ERZEUGEN EINES OPTISCHEN CODES, OPTISCHER CODE SOWIE VERFAHREN ZUM VERIFIZIEREN EINES OPTISCHEN CODES**
METHOD FOR GENERATING AN OPTICAL CODE, OPTICAL CODE AND METHOD FOR VERIFYING AN OPTICAL CODE
PROCÉDÉ DE GÉNÉRATION DE CODE OPTIQUE, CODE OPTIQUE ET PROCÉDÉ DE VÉRIFICATION DE CODE OPTIQUE

(30) Priorität: 24.05.2022 DE 102022113129
(43) Veröffentlichungstag der Anmeldung: 29.11.2023
(73) Patentinhaber: Ernst-Abbe-Hochschule Jena, 07745 Jena (DE)
(72) Erfinder: BLIEDTNER, Prof. Dr. Jens, 07745 Jena (DE); LAYHER, Michel, 07743 Jena (DE); ECKHARDT, Lukas, 07745 Jena (DE)
(74) Vertreter: Gleim Petri Patent- und Rechtsanwaltspartnerschaft mbB

(56) Entgegenhaltungen:
- EP-A1- 4 044 182
- CN-B- 108 268 922
- US-A1- 2022 414 405

## Beschreibung

### Gebiet der Erfindung

Die Erfindung betrifft ein Verfahren zum Erzeugen eines optischen Codes, den optischen Code zur Kennzeichnung von Objekten sowie ein Verfahren zum Verifizieren des optischen Codes.

### Stand der Technik

Das Kennzeichnen von Produkten bzw. Geräten nimmt eine zunehmend größere Rolle bei der Herstellung eben dieser ein. Eine fälschungssichere Kennzeichnung der Produkte und Geräte sorgt dafür, dass Nachahmungen Dritter erkannt und von Originalen unterschieden werden können. Das ist insbesondere dann notwendig, wenn Hersteller hohe Anforderungen an Qualität, Sicherheit und Verarbeitung ihrer Produkte haben.

Es gibt verschiedenste Methoden Produkte zu kennzeichnen. Barcodes sind die verbreitetste Art der Kennzeichnung. Diese sind jedoch leicht zu fälschen und bieten nur einen begrenzten Schutz vor Nachahmungen bei der Kennzeichnung. RFID-Kennzeichnungen sind zwar deutlich schwerer zu fälschen, jedoch sind die Kosten für solche Kennzeichnungen hoch und eine Fälschungssicherheit, die den Schutz vor einer Fälschung bzw. Replikation des Produkts angibt, hängt direkt von einer Länge eines codierten Schlüssels ab. Um die Fälschungssicherheit zu erhöhen, muss daher eine längere Zeit für eine Verifizierung der Kennzeichnung in Kauf genommen werden.

Aus Doroschak, Kathryn, et al.: "Rapid and robust assembly and decoding of molecular tags with DNA-based nanopore signatures." (Nature communications 11.1 (2020): 1-8.) ist ein Verfahren zum Kennzeichnen von physischen Objekten mit einer DNA-basierten Kennzeichnung bekannt. Die DNA-basierte Kennzeichnung wird auf ein Objekt aufgebracht und dehydriert, wodurch sie robuster gegenüber Umwelteinflüssen wird. Die Kennzeichnung kann anschließend sequenziert und ausgelesen werden, um sie zu verifizieren.

CN 108 268 922 B ist im Oberbegriff der unabhängigen Ansprüche wiedergegeben und offenbart ein Formidentifikations-Stereocodesystem, das mit der Erkennung durch einen menschlichen Computer kompatibel ist. Das System umfaßt ein Code-Untersystem, ein Code-Schreib-Untersystem und ein Code-Lese-Untersystem. Das Code-Untersystem umfaßt einen ursprünglichen Formcode, einen Übergangscode und einen Stereocode. Der Stereocode umfasst eine Mehrzahl von Informationseinheiten. Jede Informationseinheit sind Senkbohrungen unterschiedlicher Tiefe, die spezifische Informationen tragen, die auf der Oberfläche einer Form angeordnet sind, und die Vielzahl von Informationseinheiten bilden den Stereocode gemäß einer Matrixanordnung von Zeilen und Spalten.

Bekannte Verfahren zum Erzeugen einer fälschungssicheren Kennzeichnung von Objekten weisen entweder eine niedrige Fälschungssicherheit oder einen sehr hohen Aufwand beim Erzeugen der Kennzeichnung und/oder beim Verifizieren der Kennzeichnung auf. Auch die Beständigkeit der erzeugten Kennzeichnungen kann nicht ausreichend sein, um ein Objekt über seinen gesamten Lebenszyklus zu kennzeichnen.

### Beschreibung der Erfindung

Es ist daher die Aufgabe der Erfindung, ein Verfahren zum Erzeugen eines optischen Codes bereitzustellen, das eine beständige, eineindeutige Kennzeichnung von Objekten ermöglicht. Ferner sollen ein optischer Code sowie ein Verfahren zur Verifizierung eines optischen Codes bereitgestellt werden.

Die Aufgabe wird durch das Verfahren nach Anspruch 1 zum Erzeugen eines optischen Codes gelöst, bei dem optische Elemente in eine Oberfläche eines Objekts durch Polieren mittels eines Bearbeitungslasers in vorgegebener Anordnung eingebracht werden. Die optischen Elemente können dabei in unregelmäßiger Anordnung angeordnet werden, sofern die Anordnung entsprechend einer Vorgabe erfolgt und reproduzierbar ist. Insbesondere können die optischen Elemente jedoch in regelmäßiger Anordnung eingebracht werden, was die Handhabung erleichtert. Regelmäßig ist jede Anordnung der optischen Elemente, die nicht zufällig ist. Die Anordnung der optischen Elemente folgt also einer vorgegebenen Regel oder Ordnung. Die optischen Elemente können beispielsweise in einem Kreis, einer Ellipse oder einem gleichseitigen M-Eck oder in einem Raster eingebracht werden, wobei M eine beliebige natürliche Zahl ist. Die optischen Elemente können auch in mehreren Kreisen, Ellipsen oder gleichseitigen M-Ecken mit demselben Mittelpunkt eingebracht werden. Durch das Polieren wird eine Oberflächenrauheit der optischen Elemente gegenüber einer Oberflächenrauheit der umgebenden Oberfläche reduziert. Die Formen der optischen Elemente werden so vorgegeben, dass sie, wenn sie mit Licht, das von mindestens einer Lichtquelle mit mindestens einer vorgegebenen Wellenlänge und in einem vorgegebenen Abstand emittiert wird, beleuchtet werden, das Licht brechen oder reflektieren und so eine optische Antwort generieren, die Informationen über eine optische Wirkung der optischen Elemente enthält und das Objekt eineindeutig kennzeichnet. Die optische Wirkung der optischen Elemente beschreibt den Einfluss, den die optischen Elemente auf das Licht ausüben. Dabei kann die optische Wirkung sowohl eine Brechung, als auch eine Reflexion oder aber diffraktive Wirkung des Lichts umfassen. Die optische Wirkung eines optischen Elements ist von der Form des optischen Elements abhängig.

Durch das Einbringen der optischen Elemente in vorgegebener Anordnung mit einem Bearbeitungslaser ist das Erzeugen des optischen Codes mit dem erfindungsgemäßen Verfahren wenig zeitintensiv. Einzelne optische Elemente können innerhalb von wenigen Millisekunden erzeugt werden. Die Anordnung und die Formen der optischen Elemente werden vorgegeben. Sie sind also schon vor dem Einbringen der optischen Elemente bekannt bzw. ermittelt worden.

Der Bearbeitungslaser kann vorteilhaft ein CO₂-Laser sein, da dieser eine hohe Absorptionsrate in Kunststoffen aufweist. Vorteilhaft weist der Bearbeitungslaser bei der Erzeugung der optischen Elemente geringe Fokusdurchmesser, beispielsweise kleiner als 300 µm, auf. Eine Intensität der Laserstrahlung des Bearbeitungslasers ist so zu wählen, dass der Materialabtrag und/oder das Polieren zur Formung der optischen Elemente möglich sind. Eine Intensität von ca. 10⁵ W/cm² für den Materialabtrag und eine Intensität von ca. 10⁴ W/cm² für das Polieren sind für die meisten Kunststoffe ausreichend, um den erforderlichen Energieeintrag bereitstellen zu können und um kurze Prozesszeiten zu ermöglichen. Eine Leistung des Bearbeitungslasers kann für die Bearbeitung von Kunststoffen beispielsweise 20 W zum Einbringen der optischen Elemente und 5 W zum Polieren der Oberfläche betragen.

Der Bearbeitungslaser kann ebenso vorteilhaft ein Ultrakurzpulslaser sein. Der Fokusdurchmesser des Bearbeitungslasers kann besonders vorteilhaft kleiner oder gleich 10 µm sein.

Für sehr einfache, zum Beispiel sphärische optische Elemente, kann auf ein Abtragen verzichtet werden und die optischen Elemente direkt durch das Polieren erzeugt werden. Dem Polierprozess kann in diesem Fall ein Aufschmelzprozess vorangestellt sein.

Für komplexere optische Elemente wird vor dem Polieren ein Materialabtrag, vorzugsweise mit dem Bearbeitungslaser, vorgenommen, um die optischen Elemente in die Oberfläche einzubringen.

Die optische Antwort umfasst alle in Folge der Beleuchtung von den optischen Elementen gebrochenen oder reflektierten Anteile des von der Lichtquelle emittierten Lichts.

Die Oberflächenrauheit der optischen Elemente ist nach der Politur vorteilhaft um mindestens eine Größenordnung kleiner die Oberflächenrauheit der umgebenden Oberfläche. Besonders vorteilhaft ist die Oberflächenrauheit der optischen Elemente um mindestens drei Größenordnungen kleiner als die Oberflächenrauheit der umgebenden Oberfläche.

Vorteilhaft werden die Formen der optischen Elemente so vorgegeben, dass die optischen Elemente als optische Antwort ein Reflexionsmuster auf der der Lichtquelle zugewandten Seite des Objekts generieren. Dazu können die optischen Elemente beispielsweise die Form eines Hohlspiegels, vorzugsweise eines sphärischen Hohlspiegels oder eines Parabolspiegels, einer zylinderförmigen Vertiefung, oder eines Freiformreflektors aufweisen.

Alternativ werden die Formen der optischen Elemente so vorgegeben, dass die optischen Elemente als optische Antwort ein Brechungsmuster auf der der Lichtquelle abgewandten Seite des Objekts generieren. Dazu können die optischen Elemente beispielsweise die Form einer optischen Linse, vorzugsweise einer sphärischen Linse oder einer Zylinderlinse, oder eine optische Freiform aufweisen.

Durch die Form des optischen Elements wird die Geometrie eines reflektierten Strahlenbündels vorgegeben. Das reflektierte Strahlenbündel kann beispielsweise pyramiden- oder kegelförmig verlaufen. Neben einem Strahlprofil in einer Bildebene, kann das erzeugte Strahlprofil auch außerhalb der Bildebene detektiert und ausgewertet werden, um eine Fälschungssicherheit zu erhöhen. Das Strahlprofil kann in der Bildebene, die gleichzeitig eine Fokusebene sein kann, eine beliebige Geometrie aufweisen. Eine Divergenz des von dem optischen Element reflektierten oder gebrochenen Strahlenbündels kann ebenso detektiert werden.

Wenn die Oberfläche des Objekts bereits poliert ist oder eine geringe Oberflächenrauheit aufweist, kann es von Vorteil sein, die Oberfläche vor dem Einbringen der optischen Elemente aufzurauen. Ein Aufrauen kann mit dem Bearbeitungslaser oder mit einem anderen Werkzeug vorgenommen werden. Durch das Aufrauen soll die Oberflächenrauheit der Oberfläche hinreichend erhöht werden, um die einzubringenden optischen Elemente besser von der umgebenden Oberfläche unterscheidbar zu machen.

Um den erzeugten optischen Code beständig gegenüber Umwelteinflüssen zu machen ist es von Vorteil, wenn nach dem Polieren der optischen Elemente eine Schutzschicht auf die optischen Elemente aufgebracht wird. Die Schutzschicht ist vorteilhaft transparent für das von der Lichtquelle emittierte Licht und kann mehrere Lagen aufweisen. Zudem ist es von Vorteil, wenn die Schutzschicht möglichst dünn und beständig gegenüber Umwelteinflüssen, insbesondere gegenüber mechanischer Einwirkung, ist. Die Dicke der Schutzschicht beträgt vorteilhaft weniger als 1 mm, besonders vorteilhaft weniger als 250 µm. Die Schutzschicht kann zusätzlich optische Eigenschaften, wie zum Beispiel polarisations-, amplituden- oder phasenändernde Eigenschaften aufweisen, die ein Auslesen des optischen Codes erleichtern und/oder die Fälschungssicherheit erhöhen.

Um das gekennzeichnete Objekt, in dessen Oberfläche die optischen Elemente eingebracht worden sind, verifizieren zu können, kann nach dem Polieren der optischen Elemente oder nach dem Aufbringen einer Schutzschicht die optische Antwort der optischen Elemente aufgenommen und dem Objekt zugeordnet gespeichert werden. Um den optischen Code zu verifizieren, kann erneut eine optische Antwort der optischen Elemente aufgenommen und eine daraus generierte Signatur mit einer aus einer gespeicherten optischen Antwort generierten Referenzsignatur verglichen werden. Bei hinreichender Ähnlichkeit der Signatur mit der Referenzsignatur kann der optische Code verifiziert werden. Eine hinreichende Ähnlichkeit liegt dann vor, wenn die Signatur in einem vorgegebenen Toleranzbereich mit der Referenzsignatur übereinstimmt. Das heißt, dass Teile der Signatur von der Referenzsignatur abweichen können. Wenn der gesamte optische Code detektiert wird, kann dieser trotz eines beschädigten optischen Elements dennoch verifiziert werden. Wenn die Wellenfronten eines Teils der optischen Elemente detektiert werden, können detektierte Wellenfronten trotz geringer Abweichungen verifiziert werden.

Die Aufgabe wird außerdem durch den optischen Code nach Anspruch 8 zur Kennzeichnung von Objekten gelöst, der optische Elemente, die in vorgegebener Anordnung in eine Oberfläche des Objekts eingebracht sind, umfasst. Die optischen Elemente sind poliert, so dass sie jeweils eine reduzierte Oberflächenrauheit gegenüber einer Oberflächenrauheit der umgebenden Oberfläche aufweisen. Die Oberflächenrauheit ist der Grad einer Unebenheit der Oberfläche unterhalb der Größenskala ihrer Form oder Welligkeit, aber oberhalb der Unregelmäßigkeit von Kristallgitterstrukturen. Die Formen der optischen Elemente sind so vorgegeben, dass sie, wenn sie mit Licht, das von mindestens einer Lichtquelle mit mindestens einer vorgegebenen Wellenlänge und in einem vorgegebenen Abstand emittiert wird, beleuchtet werden, das Licht brechen oder reflektieren und so eine optische Antwort generieren. Die optische Antwort enthält Informationen über eine optische Wirkung der optischen Elemente und kennzeichnet das Objekt eineindeutig.

Zweckmäßig sind die optischen Elemente in einem Raster angeordnet und reflektierend für das von der Lichtquelle emittierte Licht ausgebildet. Ein Raster ist ein Beispiel für eine regelmäßige Anordnung. Durch die Anordnung der optischen Elemente in einem Raster kann eine hohe Dichte an optischen Elementen erreicht werden. Weitere Beispiele für regelmäßige Anordnungen sind die Anordnung auf einem Kreis, einer Ellipse oder einem gleichseitigen M-Eck. Die optischen Elemente können auch auf mehreren Kreisen, Ellipsen oder gleichseitigen M-Ecken mit demselben Mittelpunkt angeordnet sein.

Es ist von Vorteil, wenn die optischen Elemente fokussierende Strukturen sind. Die optischen Elemente können eine gemeinsame Fokusebene aufweisen.

Jedes optische Element kann aus zwei oder mehr Teilelementen bestehen, die voneinander abweichende optische Eigenschaften und Formen aufweisen können. Die Teilelemente können beispielsweise voneinander abweichende Radien aufweisen.

Um das Objekt möglichst unauffällig zu kennzeichnen und um ein Erscheinungsbild des Objekts nicht zu beeinflussen, können die optischen Elemente Mikrostrukturen mit einer Ausdehnung von weniger als 1 mm sein. Mit "Ausdehnung" kann beispielsweise der Durchmesser oder die Kantenlänge optischer Elemente gemeint sein, je nach Form des optischen Elements. Besonders vorteilhaft sind die optischen Elemente ausgeführt als Mikrostrukturen mit einer Ausdehnung von weniger als 100 µm.

Die Aufgabe wird schließlich auch durch das Verfahren nach Anspruch 14 zum Verifizieren eines optischen Codes gelöst, bei dem ein Objekt mit einem optischen Code bereitgestellt wird, der in vorgegebener Anordnung eingebrachte optische Elemente enthält. Die optischen Elemente weisen jeweils eine reduzierte Oberflächenrauheit gegenüber einer umgebenden Oberfläche auf. Die optischen Elemente werden mit Licht beleuchtet, das von mindestens einer Lichtquelle mit mindestens einer vorgegebenen Wellenlänge und in einem vorgegebenen Abstand emittiert wird, wobei das Licht von den optischen Elementen gebrochen oder reflektiert wird und so eine optische Antwort generiert wird, die Informationen über eine optische Wirkung der optischen Elemente enthält. Es kann nur eine Lichtquelle vorhanden sein und die eine Lichtquelle kann dazu ausgelegt sein, Licht mehrerer unterschiedlicher Wellenlängen zu emittieren. Es können alternativ mehrere Lichtquellen vorhanden sein, die jeweils Licht einer oder mehrerer Lichtquellen emittieren können. Die optische Antwort wird mit mindestens einem Sensor detektiert, wobei in mindestens einem vorgegebenen Abstand eine Intensitätsverteilung des gesamten optischen Codes und/oder Wellenfronten eines Teils der optischen Elemente detektiert werden. Der Teil der optischen Elemente umfasst dabei mindestens ein einzelnes optisches Element, kann aber auch mehrere umfassen. Bei der Detektion des gesamten optischen Codes werden selbstverständlich die Antworten aller optischen Elemente detektiert. Nach der Detektion wird die optische Antwort mit einer Auswerte- und Speichereinheit ausgewertet, wobei eine dem Objekt zugeordnete Signatur generiert wird. Die Signatur wird mit einer dem Objekt zugeordneten Referenzsignatur verglichen und bei hinreichender Ähnlichkeit der Signatur mit der Referenzsignatur wird der optische Code verifiziert.

Die Signatur kann beispielsweise eine Zahlenfolge oder eine mathematische Funktion zur Beschreibung von Wellenfronten sein. Sie wird mit einer bereits vorhandenen Referenzsignatur verglichen. Die Referenzsignatur kann aus der nach dem Polieren oder nach dem Aufbringen der Schutzschicht gespeicherten optischen Antwort generiert werden oder schon vor dem Erzeugen des optischen Codes vorhanden sein und zum Erzeugen des optischen Codes verwendet werden.

Dabei kann nicht nur die Form der optischen Elemente, sondern auch deren Anordnung, insbesondere deren Abstand zueinander, ausgewertet werden.

Die optische Antwort kann in unterschiedlichen Abständen und aus unterschiedlichen Richtungen von dem Sensor detektiert werden. Der Sensor kann beispielsweise als CCD-Sensor ausgeführt sein.

Vorteilhaft können mehrere Lichtquellen vorhanden sein. Die Emissionsspektren der Lichtquellen können sich voneinander unterscheiden. Alternativ oder zusätzlich können sich beispielsweise Intensitäten, Abstrahlcharakteristiken oder Arten der Lichtquellen voneinander unterscheiden. Besonders vorteilhaft werden zur Beleuchtung schmalbandige Lichtquellen mit einer vorgegebenen Zentralwellenlänge verwendet.

Wenn die Wellenfronten eines Teils der optischen Elemente oder einzelner optischer Elemente detektiert werden, wird dazu vorzugsweise ein Shack-Hartmann-Sensor verwendet.

Wenn eine Intensitätsverteilung des gesamten optischen Codes detektiert wird und die optischen Elemente in einem Raster angeordnet sind, können vorteilhaft die Fokuslagen einzelner optischer Elemente ausgewertet werden. Dabei können N Teilmengen von optischen Elementen mit N Fokusebenen gebildet werden, wobei den optischen Elementen jeder Teilmenge derselbe Wert zugeordnet wird und aus den Teilmengen die Signatur generiert wird. N ist eine natürliche Zahl.

Bei einer einfach durchzuführenden und zeitsparenden Ausgestaltung des Verfahrens kann die Detektion der optischen Antwort nur in einer vorgegebenen Ebene erfolgen und bei der Auswertung nur die optische Antwort von optischen Elementen berücksichtigt werden, deren Fokus in der vorgegebenen Ebene liegt.

Um das Verfahren zum Verifizieren des optischen Codes für Dritte weniger nachvollziehbar zu gestalten, kann vor dem Detektieren der optischen Antwort ein optischer Filter auf die optische Antwort angewendet werden. Der optische Filter kann beispielsweise ein Polarisationsfilter oder ein Spektralfilter sein. Alternativ oder zusätzlich kann der optische Code mit unterschiedlichen Wellenlängen beleuchtet werden und/oder die optische Antwort aus mehreren Anteilen, die jeweils einer Wellenlänge zugeordnet sind, bestehen.

### Kurze Beschreibung der Zeichnungen

Nachfolgend wird die Erfindung anhand von Ausführungsbeispielen unter Bezugnahme auf die beigefügten Zeichnungen, die ebenfalls erfindungswesentliche Merkmale offenbaren, noch näher erläutert. Diese Ausführungsbeispiele dienen lediglich der Veranschaulichung und sind nicht als einschränkend auszulegen. Beispielsweise ist eine Beschreibung eines Ausführungsbeispiels mit einer Vielzahl von Elementen oder Komponenten nicht dahingehend auszulegen, dass alle diese Elemente oder Komponenten zur Implementierung notwendig sind. Vielmehr können andere Ausführungsbeispiele auch alternative Elemente und Komponenten, weniger Elemente oder Komponenten oder zusätzliche Elemente oder Komponenten enthalten. Elemente oder Komponenten verschiedener Ausführungsbespiele können miteinander kombiniert werden, sofern nichts anderes angegeben ist. Modifikationen und Abwandlungen, welche für eines der Ausführungsbeispiele beschrieben werden, können auch auf andere Ausführungsbeispiele anwendbar sein. Zur Vermeidung von Wiederholungen werden gleiche oder einander entsprechende Elemente in verschiedenen Figuren mit gleichen Bezugszeichen bezeichnet und nicht mehrmals erläutert. Es zeigen:
- Fig. 1: das Einbringen eines optischen Elements in ein Objekt und das Polieren des optischen Elements,
- Fig. 2A: eine erste Ausführung eines optischen Codes,
- Fig. 2B: eine zweite Ausführung eines optischen Codes,
- Fig. 3: eine schematische Darstellung einer ersten Ausgestaltung einer Anordnung zum Verifizieren des optischen Codes,
- Fig. 4: eine schematische Darstellung einer zweiten Ausgestaltung der Anordnung zum Verifizieren des optischen Codes,
- Fig. 5: eine schematische Darstellung einer dritten Ausgestaltung der Anordnung zum Verifizieren des optischen Codes,
- Fig. 6a: eine schematische Darstellung einer vierten Ausgestaltung der Anordnung zum Verifizieren des optischen Codes,
- Fig. 6b: eine schematische Darstellung einer fünften Ausgestaltung der Anordnung zum Verifizieren des optischen Codes,
- Fig. 7: eine schematische Darstellung einer sechsten Ausgestaltung der Anordnung zum Verifizieren des optischen Codes,
- Fig. 8: eine schematische Darstellung einer dritten Ausführung eines optischen Codes, einer detektierten optischen Antwort und einer daraus generierten Signatur
- Fig. 9: eine schematische Darstellung einer vierten Ausführung eines optischen Codes, der detektierten optischen Antwort und der daraus generierten Signatur.

### Ausführliche Beschreibung der Zeichnungen

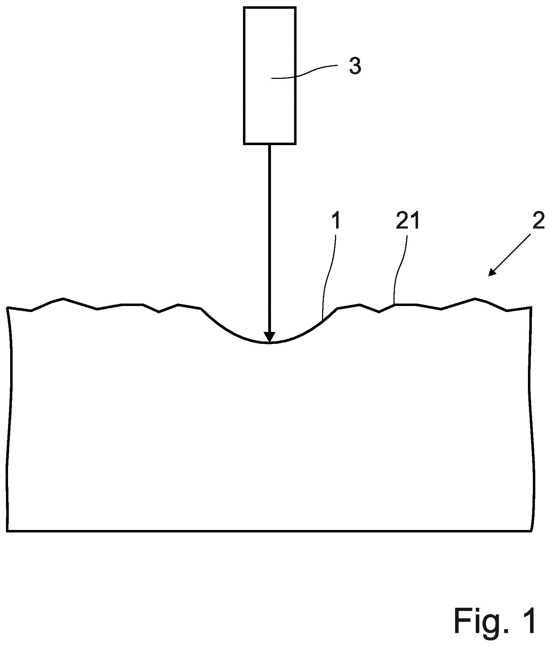

Fig.1 zeigt wie mittels eines Bearbeitungslasers 3 ein optisches Element 1 in die Oberfläche 21 eines Objekts 2 eingebracht wird. Um das optische Element 1 in die Oberfläche 21 einzubringen, wird Material von der Oberfläche 21 durch einen Energieeintrag mittels des Bearbeitungslasers 3, der vorzugsweise als CO₂-Laser ausgebildet ist, abgetragen. Das entstehende optische Element 1 wird anschließend mittels des Bearbeitungslasers 3 poliert, wobei durch das Polieren eine Oberflächenrauheit des optischen Elements 1 gegenüber einer Oberflächenrauheit der umgebenden Oberfläche 21 des Objekts 2 reduziert wird. Das Abtragen und das Polieren kann mit zwei unterschiedlichen Lasern oder vorteilhafterweise auch mit nur einem Laser erfolgen, der entsprechend verschiedener Verfahrensparameter eine Intensität und eine Strahlgeometrie für das Abtragen und das Polieren dynamisch variieren kann. Im Strahlengang des Bearbeitungslasers können während des Erzeugens der optischen Elemente 1 verschiedene Optiken, insbesondere Optiken zur Strahlformung und/oder Strahlfokussierung angeordnet sein.

Formen der optischen Elemente 1 werden so vorgegeben, dass sie, wenn sie mit Licht, das von mindestens einer Lichtquelle 4 mit mindestens einer vorgegebenen Wellenlänge und in einem vorgegebenen Abstand emittiert wird, beleuchtet werden, das Licht brechen oder reflektieren und so eine optische Antwort generieren, die Informationen über eine optische Wirkung der optischen Elemente 1 enthält und das Objekt 2 eineindeutig kennzeichnet. Wenn die Oberflächenrauheit der umgebenden Oberfläche 21 zu gering ist, kann die Oberfläche 21 vor dem Einbringen der optischen Elemente 1 aufgeraut werden. Das Objekt 2 kann beispielsweise mittels additiver Fertigung gefertigt sein. Die Oberflächenrauheit von mittels additiver Fertigung gefertigten Teilen liegt in der Größenordnung einiger Mikrometer bis hin zu einigen zehn Mikrometern. Durch das Polieren kann die Oberflächenrauheit vorteilhaft um mindestens eine Größenordnung auf einige hundert Nanometer bis hin zu wenigen Nanometern reduziert werden. Das entspricht der Qualität optischer Funktionsflächen, wie sie beispielsweise bei einer Präzisionsbearbeitung mit Diamantwerkzeugen oder dem Spritzguss optischer Linsen erzielt wird.

Die Form des optischen Elements 1 wird vorgegeben. Die Form wird in Abhängigkeit von einer gewünschten Brennweite oder Wellenfrontgeometrie vorgegeben. Sie hängt somit indirekt von einer gewünschten Fälschungssicherheit ab. Diese erhöht sich mit der Anzahl der optischen Elemente 1 und ist von einem Verifikationsverfahren abhängig. Es kann beispielsweise eine Brennweite eines optischen Elements 1 vorgegeben sein, von welcher der Radius des optischen Elements 1 abhängt. Es kann auch eine Wellenfront, die als optische Antwort erzeugt werden soll, vorgegeben werden und das optische Element 1 entsprechend der zu erzeugenden Wellenfront geformt bzw. erzeugt werden. In Fig. 1 ist beispielhaft ein reflektierendes optisches Element 1 in die Oberfläche 21 eingebracht, dass die Form eines Hohlspiegels aufweist. Die kennzeichnende Wirkung eines optischen Codes entsteht jedoch erst durch das Einbringen aller optischen Elemente 1.

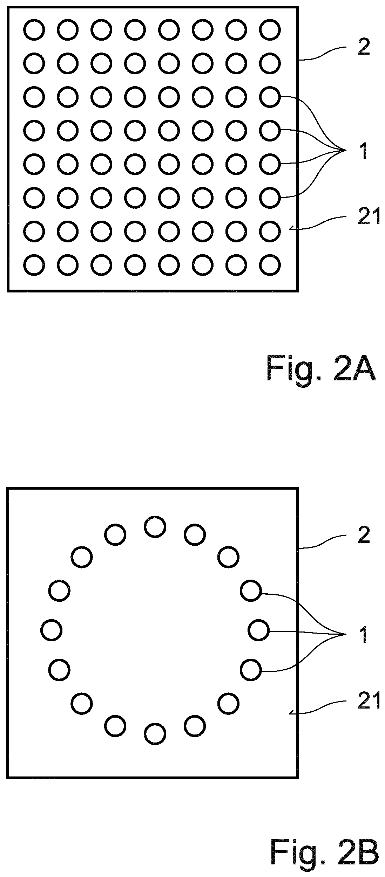

Unterschiedliche Ausführungen optischer Codes sind in Fig. 2A und Fig. 2B dargestellt. Die optischen Elemente 1 sind in regelmäßiger Anordnung in die Oberfläche 21 eingebracht und weisen eine reduzierte Oberflächenrauheit gegenüber einer Oberflächenrauheit der umgebenden Oberfläche 21 auf. In Fig. 2A sind sie in einer ersten Ausführung in einem Raster eingebracht, das acht Reihen und acht Spalten aufweist. In Fig. 2B sind in einer zweiten Ausführung sechzehn optische Elemente 1 kreisförmig angeordnet. Die Form der optischen Elemente 1 ist beispielhaft als Kreis dargestellt. Die äußeren Formen der einzelnen optischen Elemente 1 können gleich sein, sie können sich aber auch unterscheiden. In den in Fig. 2A und Fig. 2B dargestellten Ausführungsbeispielen können die optischen Elemente 1 beispielsweise sphärische Hohlspiegel mit voneinander abweichenden Brennweiten sein. Die Formen der optischen Elemente 1 sind so vorgegeben, dass sie, wenn sie mit Licht, das von mindestens einer Lichtquelle 4 mit mindestens einer vorgegebenen Wellenlänge und in einem vorgegebenen Abstand emittiert wird, beleuchtet werden, das Licht brechen oder reflektieren und so die optische Antwort generieren, die Informationen über eine optische Wirkung der optischen Elemente 1 enthält und das Objekt 2 eineindeutig kennzeichnet.

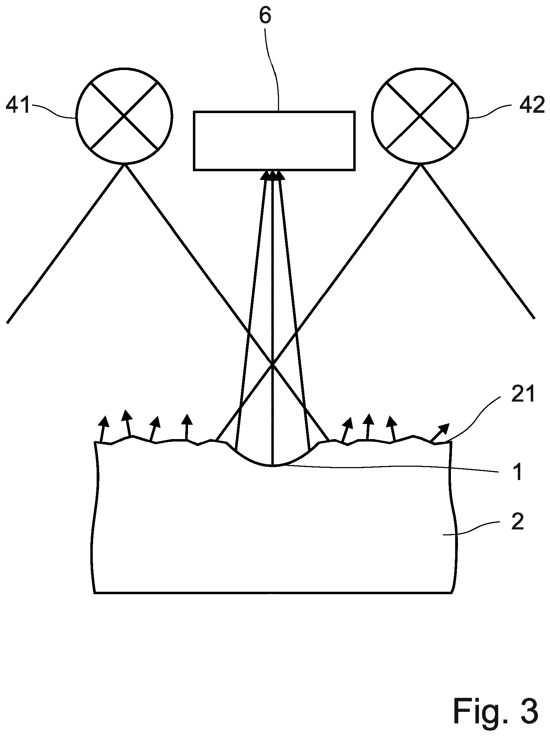

Eine erste Ausgestaltung einer Anordnung zum Verifizieren eines optischen Codes ist in Fig. 3 dargestellt. Der zu verifizierende optische Code weist in regelmäßiger Anordnung in die Oberfläche 21 eines Objekts 2 eingebrachte optische Elemente 1 auf und ist in einem vorgegebenen Abstand zu einer ersten Lichtquelle 41 und einer zweiten Lichtquelle 42 angeordnet. Die Oberfläche 21 des Objekts 2 wird von der ersten Lichtquelle 41 und der zweiten Lichtquelle 42 beleuchtet. Die erste Lichtquelle 41 und die zweite Lichtquelle 42 können identische oder unterschiedliche Emissionseigenschaften aufweisen. Die erste Lichtquelle 41 und die zweite Lichtquelle 42 emittieren Licht mit mindestens einer vorgegebenen Wellenlänge. Um die Darstellung zu vereinfachen, ist nur ein optisches Element 1 des optischen Codes gezeigt, wobei das optische Element 1 reflektierend ausgebildet ist und ein Sensor 6 in einer Fokusebene des optischen Elements 1 angeordnet ist. Das optische Element 1 weist eine reduzierte Oberflächenrauheit gegenüber der umgebenden Oberfläche 21 auf. Die das optische Element 1 umgebende Oberfläche 21 reflektiert das Licht in dem gezeigten Beispiel diffus, wohingegen das konkav ausgebildete optische Element 1 das Licht gerichtet in Richtung des Sensors 6 reflektiert und so die optische Antwort erzeugt. Die optische Antwort wird von dem Sensor 6 detektiert. Bei der dargestellten Ausgestaltung kann auch in dem vorgegebenen Abstand eine Intensitätsverteilung des gesamten optischen Codes detektiert werden.

Die optische Antwort wird anschließend mit einer Auswerte- und Speichereinheit (nicht dargestellt) ausgewertet, wobei eine dem Objekt 2 zugeordnete Signatur generiert wird. Die Signatur wird mit einer Referenzsignatur verglichen und bei hinreichender Ähnlichkeit der Signatur mit der Referenzsignatur wird der optische Code verifiziert.

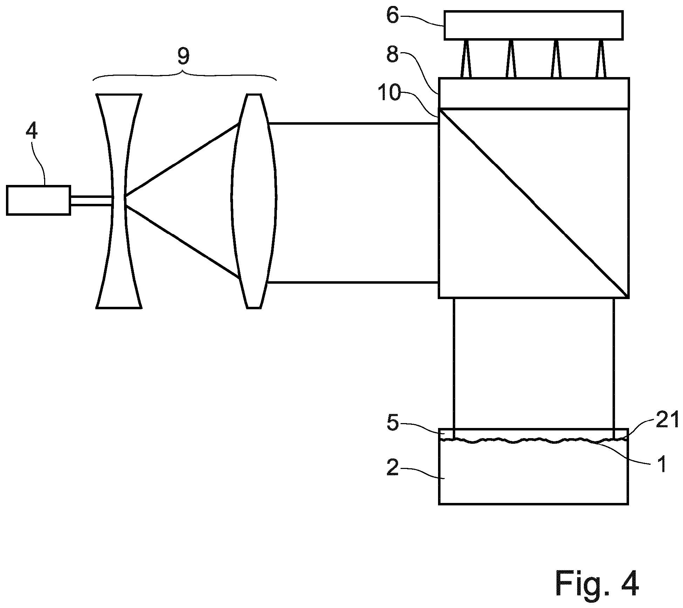

Eine zweite Ausgestaltung einer Anordnung zum Verifizieren eines optischen Codes ist in Fig. 4 dargestellt. Bei der dargestellten Ausgestaltung wird eine Intensitätsverteilung des gesamten optischen Codes detektiert. Dazu ist eine Lichtquelle 4 in einem vorgegebenen Abstand zu den optischen Elementen 1 angeordnet und emittiert Licht mit mindestens einer vorgegebenen Wellenlänge. Der Abstand ist als zurückgelegte optische Weglänge des emittierten Lichts von der Lichtquelle 4 zu den optischen Elementen 1 zu verstehen. Das von der Lichtquelle 4 emittierte Licht wird durch eine Beleuchtungsoptik 9 aufgeweitet und gelangt über einen Strahlteiler 10 zu den optischen Elementen 1. Die optischen Elemente 1 reflektieren das Licht und generieren so die optische Antwort. Die optische Antwort bzw. das von den optischen Elementen 1 reflektierte Licht wird durch den über dem Strahlteiler 10 angeordneten Sensor 6 detektiert und enthält Informationen über die optische Wirkung der optischen Elemente 1. Der Sensor 6 ist in der gemeinsamen Fokusebene der optischen Elemente 1 angeordnet. Der Sensor 6 ist in einem vorgegebenen Abstand zu den optischen Elementen 1 angeordnet. Der Abstand des Sensors 6 ist als zurückgelegte optische Weglänge der optischen Antwort von den optischen Elementen 1 zum Sensor 6 zu verstehen.

Die optische Antwort wird anschließend mit einer Auswerte- und Speichereinheit (nicht dargestellt) ausgewertet, wobei die dem Objekt 2 zugeordnete Signatur generiert wird. Die Signatur wird mit einer Referenzsignatur verglichen und bei hinreichender Ähnlichkeit der Signatur mit der Referenzsignatur wird der optische Code verifiziert.

Auf den optischen Elementen 1 ist bei der gezeigten Ausgestaltung eine - aus einer oder mehreren Lagen bestehende - Schutzschicht 5 aufgebracht, um die optischen Elemente 1 vor äußeren (mechanischen) Einwirkungen zu schützen und den optischen Code beständiger zu machen. Die Schutzschicht 5 ist transparent für das von der Lichtquelle 4 emittierte Licht ausgebildet. Des Weiteren kann die Schutzschicht oder einzelne Lagen der Schutzschicht 5 mit PVD- und CVD-Verfahren (bspw. Dip-, Spin- oder Spraycoating) aufgebracht werden, wie beispielsweise aus der Beschichtungstechnik von Brillengleitsichtgläsern bekannt. Dadurch können optische Eigenschaften, wie zum Beispiel Polarisations-, Antireflexions- oder generelle interferenzwirksame Eigenschaften der Schutzschicht 5, gezielt eingestellt werden und/oder festigkeitssteigernde Lagen aufgebracht werden. Durch die Möglichkeiten der PVD-Beschichtung können zusätzliche Codierungsparameter geschaffen werden.

In einem Detektionsstrahlengang des Sensors 6 ist bei diesem Beispiel ein optischer Filter 8 angeordnet. Dadurch kann die optische Antwort gezielt verändert werden. Es können beispielsweise die Fokusebene der optischen Elemente 1 oder Wellenfronten der optischen Elemente 1 durch den optischen Filter 8 verändert werden. Durch den optischen Filter 8 kann unter anderem ausgeschlossen werden, dass ein Objekt 2 mit einem gefälschten optischen Code, der optische Elemente 1 mit derselben Fokusebene aber abweichender Divergenz aufweist, fälschlicherweise verifiziert wird, wodurch das Fälschen des optischen Codes erschwert wird. Außerdem wird durch das Einbringen eines optischen Filters 8 in den Strahlengang des Sensors 6 das Verfahren zur Verifikation des optischen Codes für Dritte schwerer nachvollziehbar.

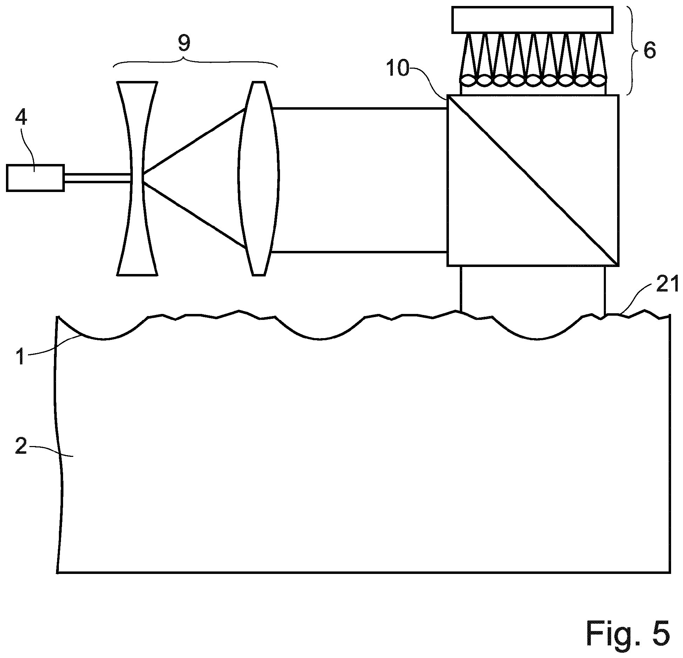

Eine dritte Ausgestaltung einer Anordnung zum Verifizieren eines optischen Codes ist in Fig. 5 dargestellt. Bei der dargestellten Ausgestaltung werden Wellenfronten einzelner optischer Elemente 1 detektiert. Die optischen Elemente 1 sind in regelmäßiger Anordnung in ein Objekt 2 als Teil des optischen Codes eingebracht und weisen eine reduzierte Oberflächenrauheit gegenüber der umgebenden Oberfläche 21 auf. Die Anordnung von Lichtquelle 4, Beleuchtungsoptik 9, Strahlteiler 10 und Sensor 6 ist ähnlich der in Fig. 4 gezeigten Anordnung. Bei der in Fig. 5 gezeigten Anordnung wird im Unterschied zur in Fig. 4 gezeigten Anordnung nur ein einzelnes optisches Element 1 mit Licht, das von der Lichtquelle 4 emittiert wird, beleuchtet. Das Licht wird von dem optischen Element 1 reflektiert, wodurch die optische Antwort generiert wird. Die optische Antwort enthält Informationen über die optische Wirkung des optischen Elements 1 und wird von dem Sensor 6 in dem vorgegebenen Abstand detektiert.

Die optische Antwort wird anschließend mit einer Auswerte- und Speichereinheit (nicht dargestellt) ausgewertet, wobei die dem Objekt 2 zugeordnete Signatur generiert wird. Die Signatur wird mit einer Referenzsignatur verglichen und bei hinreichender Ähnlichkeit der Signatur mit der Referenzsignatur wird der optische Code verifiziert.

Bei der in Fig. 5 dargestellten Ausgestaltung ist der Sensor 6 ein Shack-Hartmann-Sensor, der aus einer Linsenmaske und einem 2D-Detektor besteht. Die vom optischen Element 1 einfallende Wellenfront erzeugt durch die Linsenmaske auf dem Sensor 6 ein für den optischen Code charakteristisches Muster. Das charakteristische Muster wird von dem Sensor 6 detektiert und in eine Signatur umgewandelt, die mit einer dem Objekt 2 zugeordneten Referenzsignatur verglichen wird, um den optischen Code zu verifizieren.

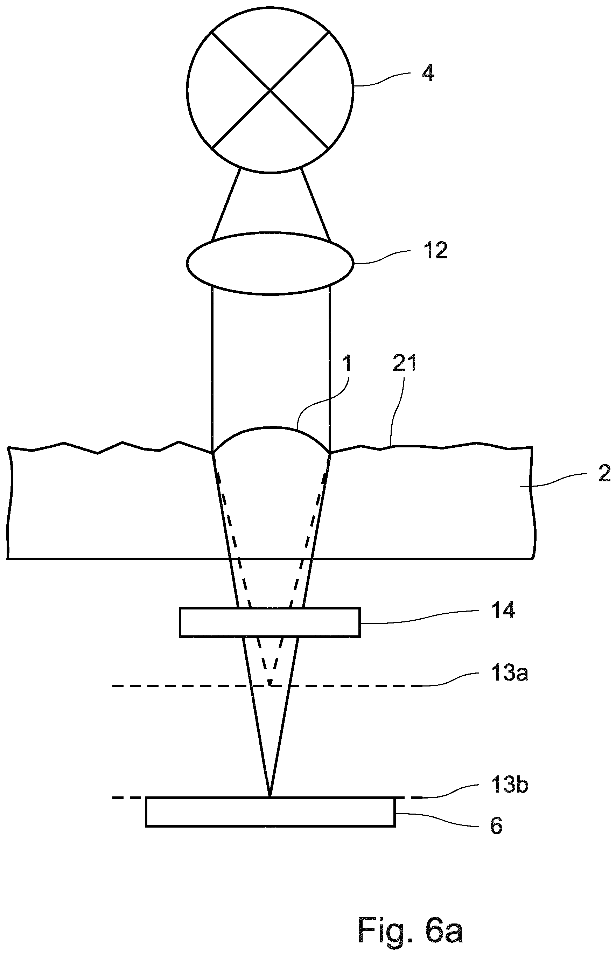

Eine schematische Darstellung einer vierten Ausgestaltung der Anordnung zum Verifizieren des optischen Codes ist in Fig. 6a gezeigt. Der Lichtquelle 4 im Strahlengang nachgeordnet ist ein Kollimator 12, der als Kollimationslinse ausgeführt ist, angeordnet. Das kollimierte Licht wird von dem optischen Element 1, das in der Oberfläche 21 des Objekts 2 eingebracht ist, gebrochen und gebündelt. Das Objekt 2 ist in der dargestellten Ausgestaltung transparent für das von der Lichtquelle 4 emittierte Licht und weist einen von der Wellenlänge des Lichts abhängigen Brechungsindex auf. Der Sensor 6 ist aus Richtung der Lichtquelle 4 hinter dem Objekt 2 angeordnet. Wenn die Lichtquelle 4 Licht unterschiedlicher Wellenlängen emittiert, wird das Licht durch das optische Element 1 in mehrere, voneinander verschiedene Fokusebenen gebrochen. In der in Fig. 6a dargestellten Ausgestaltung sind beispielhaft eine erste Fokusebene 13a und eine zweite Fokusebene 13b gezeichnet, wobei sich der Sensor 6 in der zweiten Fokusebene 13b befindet. Zur Verifizierung des optischen Codes wird der Sensor 6 einmal oder mehrmals in jeder der Fokusebenen positioniert. Durch das Aufnehmen mehrerer, den Wellenlängen des Lichts zugeordneter Fokusebenen kann eine Fälschungssicherheit erhöht werden, da optische Eigenschaften des gesamten Objekts 2 und nicht nur optische Eigenschaften des optischen Elements 1 überprüft werden können. Zur Detektion der verschiedenen Wellenlängen oder zur Manipulation der optischen Antwort kann zwischen Objekt 2 und Sensor 6 bei jeder Messung ein entsprechender Filter, beispielsweise ein Absorbing Thin-Film Reflector-Filter (ATFR-Filter) und/oder, wie in Fig. 6a gezeigt, ein Polarisationsfilter 14 angeordnet werden. Durch das Anordnen eines Filters zwischen Objekt 2 und Sensor 6 bei der Messung bzw. Verifikation des optischen Codes wird die Fälschungssicherheit erhöht, da nur mit dem entsprechenden Filter der optische Code verifiziert werden kann.

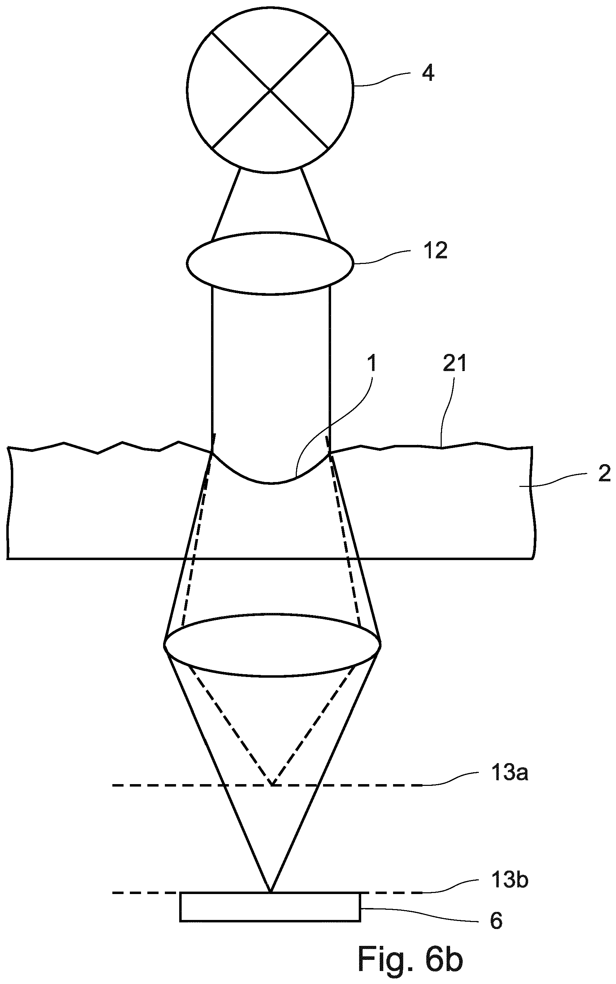

Eine schematische Darstellung einer fünften Ausgestaltung der Anordnung zum Verifizieren des optischen Codes ist in Fig. 6b gezeigt. Auch hier ist der Lichtquelle 4 im Strahlengang nachgeordnet eine Kollimationslinse 12 angeordnet. Das kollimierte Licht wird von dem optischen Element 1, das in der Oberfläche 21 des Objekts 2 eingebracht ist, gebrochen und gestreut. Zwischen Objekt 2 und Sensor 6 ist hier eine weitere Sammellinse angeordnet, die das vom Objekt 2 kommende Licht in unterschiedliche Fokusebenen bricht. In der in Fig. 6b dargestellten Ausgestaltung sind ebenfalls beispielhaft eine erste Fokusebene 13a und eine zweite Fokusebene 13b gezeichnet, wobei sich der Sensor 6 in der zweiten Fokusebene 13b befindet. Zur Verifizierung des optischen Codes wird auch hier der Sensor 6 einmal oder mehrmals in jeder der Fokusebenen positioniert.

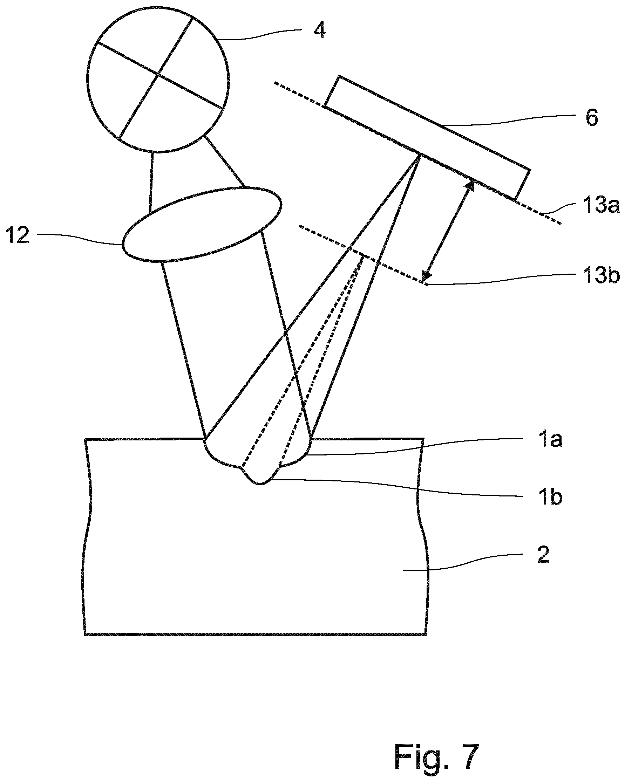

Fig. 7 stellt schematisch eine sechste Ausgestaltung der Anordnung zum Verifizieren des optischen Codes dar. Das optische Element 1 ist bei der sechsten Ausgestaltung dazu ausgebildet, das von der Lichtquelle 4 emittierte Licht zu reflektieren. Das optische Element 1 ist aus einem ersten Teilelement 1a und einem zweiten Teilelement 1b zusammengesetzt. Das erste Teilelement 1a weist einen ersten Durchmesser auf und das zweite Teilelement 1b weist einen zweiten Durchmesser auf, wobei der erste Durchmesser größer als der zweite Durchmesser ist. Eine Brennweite des ersten Teilelements 1a ist somit ebenfalls größer als eine Brennweite des zweiten Teilelements 1b. Somit weist ein optisches Element 1 mehrere Fokusebenen auf, ohne dass das Licht durch das Objekt 2 transmittiert werden muss und eine Fälschungssicherheit kann erhöht werden.

In den Fig. 6a, 6b und 7 ist ohne Beschränkung der Allgemeinheit nur ein optisches Element 1 dargestellt. Die gezeigten Ausgestaltungen lassen sich ohne Weiteres auf einen optischen Code mit mehreren optischen Elementen 1 übertragen.

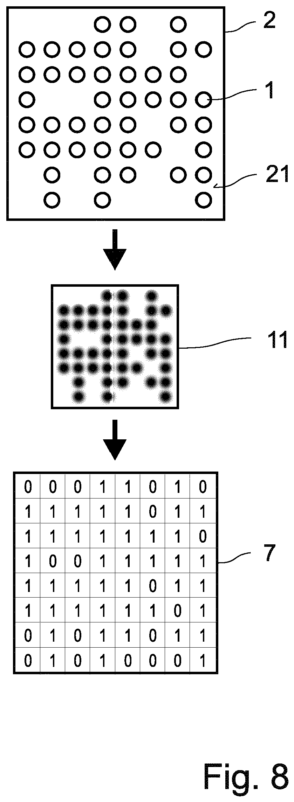

Fig. 8 zeigt eine dritte Ausführung eines optischen Codes, eine detektierte optische Antwort 11 in Form einer Intensitätsverteilung und die Signatur 7. Der optische Code umfasst die optischen Elemente 1, die in regelmäßiger Anordnung in die Oberfläche des Objekts 2 eingebracht sind. Die optischen Elemente 1 sind poliert, so dass sie jeweils eine reduzierte Oberflächenrauheit gegenüber der umgebenden Oberfläche 21 aufweisen. Die Formen der optischen Elemente 1 sind so vorgegeben, dass sie, wenn sie mit Licht, das von mindestens einer Lichtquelle 4 mit mindestens einer vorgegebenen Wellenlänge und in einem vorgegebenen Abstand emittiert wird, beleuchtet werden, das Licht brechen oder reflektieren und so die optische Antwort 11 generieren. Die optische Antwort 11 enthält Informationen über eine optische Wirkung der optischen Elemente 1 und kennzeichnet das Objekt 2 eineindeutig. Die dargestellten optischen Elemente 1 weisen eine gemeinsame Fokusebene auf. Die optische Antwort 11 wird von dem Sensor 6 in einer gemeinsamen Fokusebene der optischen Elemente 1 detektiert und enthält Informationen über den optischen Code bzw. über eine optische Wirkung der optischen Elemente 1. Aus der detektierten optische Antwort 11 wird mittels einer nicht dargestellten Auswerte- und Speichereinheit die Signatur 7 generiert. Das in Fig. 8 gezeigte Ausführungsbeispiel stellt ein einfaches Ausführungsbeispiel dar, bei dem eine Intensitätsverteilung aller optischen Elemente 1 detektiert wird und die daraus generierte Signatur 7 eine Matrix mit binären Matrixelementen ist. Dabei werden Positionen vorgegeben, an denen sich optische Elemente 1 befinden können und jeder Position, an der ein Fokus eines optischen Elements 1 detektiert wird, eine Eins zugewiesen sowie jeder Position, an der kein Fokus eines optischen Elements 1 detektiert wird, eine Null zugewiesen. Die Referenzsignatur ist in diesem Fall eine dem Objekt 2 zugeordnete Matrix mit vierundsechzig Binärelementen, wobei jedes Binärelement einer vorgegebenen Position zugeordnet ist. Die optischen Elemente 1 können unterschiedliche Fokusebenen aufweisen. Es können N Teilmengen von optischen Elementen 1 mit N Fokusebenen gebildet werden, den optischen Elementen 1 jeder Teilmenge derselbe Wert zugeordnet wird und aus den Teilmengen die Signatur 7 generiert wird. N ist eine beliebige natürliche Zahl. In dem in Fig. 8 abgebildeten Ausführungsbeispiel gibt es nur eine Teilmenge optischer Elemente 1 mit einer Fokusebene, es gilt also N=1. Beim Vergleich der Signatur 7 mit der Referenzsignatur kann ein Toleranzbereich vorgesehen sein, sodass der optische Code auch dann verifiziert werden kann, wenn optische Elemente 1 beschädigt sind.

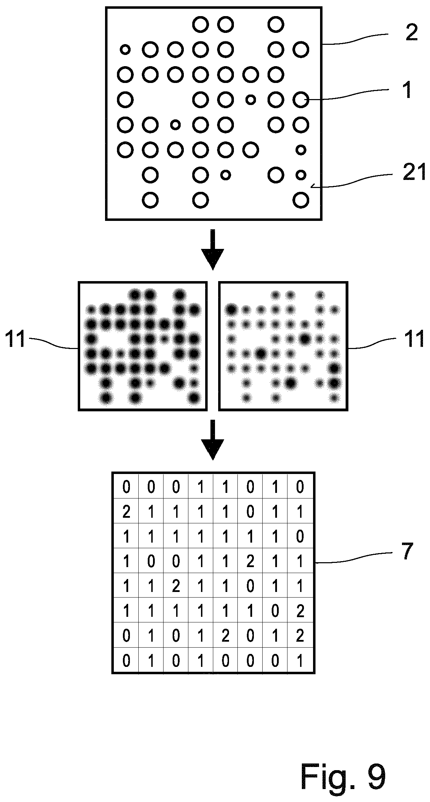

Fig. 9 zeigt eine vierte Ausführung eines optischen Codes, eine detektierte optische Antwort 11 in Form von zwei Intensitätsverteilungen, die in unterschiedlichen Abständen detektiert worden sind, und eine Signatur 7. Der optische Code umfasst die optischen Elemente 1, die in regelmäßiger Anordnung in die Oberfläche des Objekts 2 eingebracht sind. Die optischen Elemente 1 sind poliert, so dass sie jeweils eine reduzierte Oberflächenrauheit gegenüber der umgebenden Oberfläche 21 aufweisen. Die Formen der optischen Elemente 1 sind so vorgegeben, dass sie, wenn sie mit Licht, das von mindestens einer Lichtquelle 4 mit mindestens einer vorgegebenen Wellenlänge und in einem vorgegebenen Abstand emittiert wird, beleuchtet werden, das Licht brechen oder reflektieren und so die optische Antwort 11 generieren. Die optische Antwort 11 enthält Informationen über eine optische Wirkung der optischen Elemente 1 enthält. Die optische Antwort 11 kennzeichnet das Objekt 2 eineindeutig. Die dargestellten optischen Elemente 1 weisen zwei unterschiedliche Fokusebenen auf, verdeutlicht durch unterschiedliche Durchmesser der optischen Elemente 1. Die optische Antwort 11 wird von dem Sensor 6 in beiden Fokusebenen detektiert. Bei dem in Fig. 9 gezeigten Ausführungsbeispiel wird in zwei unterschiedlichen Abständen die Intensitätsverteilung aller optischen Elemente 1 detektiert und daraus die Signatur 7, die eine Matrix mit Matrixelementen ist, generiert. Dabei werden die Positionen vorgegeben, an denen sich die optischen Elemente 1 befinden können und jeder Position, an der ein erster Fokus eines optischen Elements 1 in einer ersten Fokusebene detektiert wird, eine Eins zugewiesen, jeder Position an der ein zweiter Fokus eines optischen Elements 1 in einer zweiten Fokusebene detektiert wird, eine Zwei zugewiesen sowie jeder Position, an der kein Fokus eines optischen Elements 1 detektiert wird, eine Null zugewiesen. Die Referenzsignatur ist in diesem Fall eine dem Objekt 2 zugeordnete Matrix mit vierundsechzig Elementen, wobei jedes Element einer vorgegebenen Position zugeordnet ist. In dem in Fig. 9 abgebildeten Ausführungsbeispiel gibt es somit N=2 Teilmengen optischer Elemente 1 mit N=2 Fokusebenen. Beim Vergleich der Signatur 7 mit der Referenzsignatur kann ein Toleranzbereich vorgesehen sein, sodass der optische Code auch dann verifiziert werden kann, wenn optische Elemente 1 beschädigt sind. Die zu Fig. 8 und Fig. 9 beschriebenen Verifikationsverfahren sind schnell durchführbar und stellen keine hohen Ansprüche an den Sensor 6.

Als Signatur 7 kann auch die aufgenommene Intensitätsverteilung der optischen Elemente 1 dienen. In diesem Fall wird die aufgenommene Intensitätsverteilung mit einer Referenzintensitätsverteilung, die beispielsweise durch eine Referenzmessung erzeugt sein kann, verglichen. Dadurch kann die Fälschungssicherheit erhöht werden.

### Bezugszeichenliste

- 1: optisches Element
- 1a: erstes Teilelement
- 1b: zweites Teilelement
- 2: Objekt
- 21: Oberfläche
- 3: Bearbeitungslaser
- 4: Lichtquelle
- 41: erste Lichtquelle
- 42: zweite Lichtquelle
- 5: Schutzschicht
- 6: Sensor
- 7: Signatur
- 8: Filter
- 9: Beleuchtungsoptik
- 10: Strahlteiler
- 11: optische Antwort
- 12: Kollimator
- 13a: erste Fokusebene
- 13b: zweite Fokusebene
- 14: Polarisationsfilter

## Patentansprüche

1. Verfahren zum Erzeugen eines optischen Codes, bei dem
- optische Elemente (1) in eine Oberfläche (21) eines Objekts (2) durch Polieren mittels eines Bearbeitungslasers (3) in vorgegebener Anordnung eingebracht werden,
- wobei die Formen der optischen Elemente (1) so vorgegeben werden, dass sie, wenn sie mit Licht, das von mindestens einer Lichtquelle (4) mit mindestens einer vorgegebenen Wellenlänge und in einem vorgegebenen Abstand emittiert wird, beleuchtet werden, das Licht brechen oder reflektieren und so eine optische Antwort (11) generieren, **dadurch gekennzeichnet, dass**
- durch das Polieren eine Oberflächenrauheit der optischen Elemente (1) gegenüber einer Oberflächenrauheit der umgebenden Oberfläche (21) reduziert wird,
- die optischen Elemente beim Generieren der optischen Antwort (11) eine optische Wirkung entfalten, die eine Brechung, eine Reflexion oder eine diffraktive Wirkung des Lichts umfasst, und das Objekt (2) eineindeutig kennzeichnet, und
- die optische Antwort (11) eine Intensitätsverteilung des gesamten optischen Codes und/oder Wellenfronten eines Teils der optischen Elemente (1) umfasst.

2. Verfahren nach Anspruch 1, wobei vor dem Polieren ein Materialabtrag, vorzugsweise mit dem Bearbeitungslaser (3), vorgenommen wird, um die optischen Elemente (1) in die Oberfläche (21) einzubringen.

3. Verfahren nach Anspruch 1 oder 2, wobei die Formen der optischen Elemente (1) so vorgegeben werden, dass die optischen Elemente (1) als optische Antwort (11) ein Reflexionsmuster auf der der Lichtquelle (4) zugewandten Seite des Objekts (2) generieren.

4. Verfahren nach Anspruch 1 oder 2, wobei die Formen der optischen Elemente (1) so vorgegeben werden, dass die optischen Elemente (1) als optische Antwort (11) ein Brechungsmuster auf der der Lichtquelle (4) abgewandten Seite des Objekts (2) generieren.

5. Verfahren nach einem der Ansprüche 1 bis 4, wobei vor dem Einbringen der optischen Elemente (1) die Oberfläche (21) aufgeraut wird.

6. Verfahren nach einem der Ansprüche 1 bis 5, wobei nach dem Polieren der optischen Elemente (1) eine Schutzschicht (5) auf die optischen Elemente (1) aufgebracht wird.

7. Verfahren nach einem der Ansprüche 1 bis 6, wobei nach dem Polieren der optischen Elemente (1) oder nach dem Aufbringen einer Schutzschicht (5) die optische Antwort (11) der optischen Elemente (1) aufgenommen und dem Objekt (2) zugeordnet gespeichert wird.

8. Optischer Code zur Kennzeichnung von Objekten (2), umfassend
- optische Elemente (1), die in vorgegebener Anordnung in eine Oberfläche (21) des Objekts (2) eingebracht sind,
- wobei die Formen der optischen Elemente (1) so vorgegeben sind, dass sie, wenn sie mit Licht, das von mindestens einer Lichtquelle (4) mit mindestens einer vorgegebenen Wellenlänge und in einem vorgegebenen Abstand emittiert wird, beleuchtet werden, das Licht brechen oder reflektieren und so eine optische Antwort (11) generieren, **dadurch gekennzeichnet, dass**
- die optischen Elemente (1) poliert sind, so dass sie jeweils eine reduzierte Oberflächenrauheit gegenüber einer Oberflächenrauheit der umgebenden Oberfläche (21) aufweisen,
- die optischen Elemente beim Generieren der optischen Antwort (11) eine optische Wirkung entfalten, die eine Brechung, eine Reflexion oder eine diffraktive Wirkung des Lichts umfasst und das Objekt (2) eineindeutig kennzeichnet, und
- die optische Antwort (11) eine Intensitätsverteilung des gesamten optischen Codes und/oder Wellenfronten eines Teils der optischen Elemente (1) umfasst.

9. Optischer Code nach Anspruch 8, wobei die optischen Elemente (1) in einem Raster angeordnet und reflektierend für das von der Lichtquelle (4) emittierte Licht ausgebildet sind.

10. Optischer Code nach Anspruch 8 oder 9, wobei die optischen Elemente (1) fokussierende Strukturen sind.

11. Optischer Code nach Anspruch 10, wobei die optischen Elemente (1) eine gemeinsame Fokusebene aufweisen.

12. Optischer Code nach Anspruch 10, wobei die optischen Elemente (1) voneinander abweichende Fokusebenen aufweisen.

13. Optischer Code nach einem der Ansprüche 8 bis 12, wobei die optischen Elemente (1) Mikrostrukturen mit einer Ausdehnung von weniger als 1 mm sind.

14. Verfahren zum Verifizieren eines optischen Codes, bei dem
- optische Elemente (1), die in vorgegebener Anordnung in ein Objekt (2) als Teil eines optischen Codes eingebracht sind, mit Licht beleuchtet werden, das von mindestens einer Lichtquelle (4) mit mindestens einer vorgegebenen Wellenlänge und in einem vorgegebenen Abstand emittiert wird, wobei das Licht von den optischen Elementen (1) gebrochen oder reflektiert wird und so eine optische Antwort (11) generiert wird,
- die optische Antwort (11) mit mindestens einem Sensor (6) detektiert wird,
- die optische Antwort (11) mit einer Auswerte- und Speichereinheit ausgewertet wird, wobei eine dem Objekt (2) zugeordnete Signatur (7) generiert wird und die Signatur (7) mit einer dem Objekt (2) zugeordneten Referenzsignatur verglichen wird, und
- bei hinreichender Ähnlichkeit der Signatur (7) mit der Referenzsignatur der optische Code verifiziert wird, **dadurch gekennzeichnet, dass**
- die optischen Elemente (1) jeweils eine reduzierte Oberflächenrauheit gegenüber einer umgebenden Oberfläche (21) aufweisen
- die optischen Elemente beim beim Generieren der optischen Antwort (11) eine optische Wirkung entfalten, die eine Brechung, eine Reflexion oder eine diffraktive Wirkung des Lichts umfasst, und
- beim Detektieren der optischen Antwort (11) in mindestens einem vorgegebenen Abstand eine Intensitätsverteilung des gesamten optischen Codes und/oder Wellenfronten eines Teils der optischen Elemente (1) detektiert werden.

15. Verfahren nach Anspruch 14, wobei Wellenfronten einzelner optischer Elemente (1) detektiert werden und als mindestens ein Sensor (6) ein Shack-Hartmann-Sensor verwendet wird.

16. Verfahren nach Anspruch 14, wobei die optischen Elemente (1) in einem Raster angeordnet sind, eine Intensitätsverteilung des gesamten optischen Codes detektiert wird und die Fokuslagen einzelner optischer Elemente (1) ausgewertet werden.

17. Verfahren nach Anspruch 16, wobei N Teilmengen von optischen Elementen (1) mit N Fokusebenen gebildet werden, den optischen Elementen (1) jeder Teilmenge derselbe Wert zugeordnet wird und aus den Teilmengen die Signatur (7) generiert wird.

18. Verfahren nach Anspruch 16 oder 17, wobei die Detektion der optischen Antwort (11) nur in einer vorgegebenen Ebene erfolgt und bei der Auswertung nur die optische Antwort (11) von optischen Elementen (1) berücksichtigt wird, deren Fokus in der vorgegebenen Ebene liegt.

19. Verfahren nach einem der Ansprüche 14 bis 18, wobei vor dem Detektieren der optischen Antwort (11) ein optischer Filter (8) auf die optische Antwort (11) angewendet wird.

20. Verfahren nach einem der Ansprüche 14 bis 19, wobei der optische Code mit unterschiedlichen Wellenlängen beleuchtet wird und die optische Antwort (11) aus mehreren Anteilen, die jeweils einer Wellenlänge zugeordnet sind, besteht.

## Claims

1. A method for generating an optical code, wherein
- optical elements (1) are introduced in a predetermined arrangement into a surface (21) of an object (2) by polishing using a machining laser (3),
- wherein the shapes of the optical elements (1) are predetermined such that, when illuminated with light emitted by at least one light source (4) with at least one predetermined wavelength and at a predetermined distance, they refract or reflect the light, thereby generating an optical response (11),
**characterized in that**
- polishing reduces a surface roughness of the optical elements (1) compared to a surface roughness of the surrounding surface (21),
- the optical elements, when generating the optical response (11), have an optical effect that includes refraction, reflection, or diffraction of light and uniquely identifies the object (2), and
- the optical response (11) includes an intensity distribution of the entire optical code and/or wavefronts of a portion of the optical elements (1).

2. The method according to claim 1, wherein material removal is performed prior to polishing, preferably with the machining laser (3), in order to introduce the optical elements (1) into the surface (21).

3. The method according to claim 1 or 2, wherein the shapes of the optical elements (1) are predetermined such that the optical elements (1) generate a reflection pattern on the side of the object (2) facing the light source (4) as an optical response (11).

4. The method according to claim 1 or 2, wherein the shapes of the optical elements (1) are predetermined such that the optical elements (1) generate a refraction pattern on the side of the object (2) facing away from the light source (4) as an optical response (11).

5. The method according to any one of claims 1 to 4, wherein the surface (21) is roughened before the optical elements (1) are introduced.

6. The method according to any one of claims 1 to 5, wherein after polishing the optical elements (1), a protective layer (5) is applied to the optical elements (1).

7. The method according to any one of claims 1 to 6, wherein after polishing the optical elements (1) or after applying a protective layer (5), the optical response (11) of the optical elements (1) is recorded and stored in association with the object (2).

8. An optical code for identifying objects (2), comprising
- optical elements (1) that are introduced into a surface (21) of the object (2) in a predetermined arrangement,
- wherein the shapes of the optical elements (1) are predetermined such that, when illuminated with light emitted by at least one light source (4) with at least one predetermined wavelength and at a predetermined distance, they refract or reflect the light, thereby generating an optical response (11),
**characterized in that**
- the optical elements (1) are polished so that they each have a reduced surface roughness compared to a surface roughness of the surrounding surface (21),
- the optical elements, when generating the optical response (11), have an optical effect that includes refraction, reflection, or diffraction of light and uniquely identifies the object (2), and
- the optical response (11) includes an intensity distribution of the entire optical code and/or wavefronts of a portion of the optical elements (1).

9. The optical code according to claim 8, wherein the optical elements (1) are arranged in a grid and are designed to reflect the light emitted by the light source (4).

10. The optical code according to claim 8 or 9, wherein the optical elements (1) are focusing structures.

11. The optical code according to claim 10, wherein the optical elements (1) have a common focal plane.

12. The optical code according to claim 10, wherein the optical elements (1) have different focal planes.

13. The optical code according to any one of claims 8 to 12, wherein the optical elements (1) are microstructures with a dimension of less than 1 mm.

14. A method for verifying an optical code, wherein
- optical elements (1) which are introduced in a predetermined arrangement in an object (2) as part of an optical code, are illuminated with light emitted by at least one light source (4) with at least one predetermined wavelength and at a predetermined distance, the light being refracted or reflected by the optical elements (1), thus generating an optical response (11),
- the optical response (11) is detected by at least one sensor (6),
- the optical response (11) is evaluated by an evaluation and storage unit, whereby a signature (7) assigned to the object (2) is generated and the signature (7) is compared with a reference signature assigned to the object (2), and
- if the signature (7) is sufficiently similar to the reference signature, the optical code is verified, **characterized in that**
- the optical elements (1) each have a reduced surface roughness compared to a surrounding surface (21),
- the optical elements, when generating the optical response (11), have an optical effect that includes refraction, reflection, or diffraction of light, and
- when detecting the optical response (11) with at least one predetermined distance, an intensity distribution of the entire optical code and/or wavefronts of a portion of the optical elements (1) is detected.

15. The method according to claim 14, wherein wave fronts of individual optical elements (1) are detected and a Shack-Hartmann sensor is used as at least one sensor (6).

16. The method according to claim 14, wherein the optical elements (1) are arranged in a grid, an intensity distribution of the entire optical code is detected, and the focus positions of individual optical elements (1) are evaluated.

17. The method according to claim 16, wherein N subsets of optical elements (1) with N focal planes are formed, the same value is assigned to the optical elements (1) of each subset, and the signature (7) is generated from the subsets.

18. The method according to claim 16 or 17, wherein the detection of the optical response (11) takes place only in a predetermined plane and only the optical response (11) of optical elements (1) whose focus lies in the predetermined plane is taken into account in the evaluation.

19. The method according to any one of claims 14 to 18, wherein an optical filter (8) is applied to the optical response (11) before detecting the optical response (11).

20. The method according to any one of claims 14 to 19, wherein the optical code is illuminated with different wavelengths and the optical response (11) consists of several components, each of which is assigned to a wavelength.

## Revendications

1. Procédé de génération de code optique, dans lequel
- des éléments optiques (1) sont introduits, selon une disposition prédéfinie, dans une surface (21) d'un objet (2) par polissage à l'aide d'un laser d'usinage (3),
- les formes des éléments optiques (1) étant prédéfinies de telle sorte que, lorsqu'ils sont éclairés par une lumière émise par au moins une source lumineuse (4) avec au moins une longueur d'onde prédéfinie et à une distance prédéfinie, ils réfractent ou réfléchissent la lumière et génèrent ainsi une réponse optique (11), **caractérisé en ce que**
- le polissage réduit une rugosité de surface des éléments optiques (1) par rapport à une rugosité de surface de la surface environnante (21),
- les éléments optiques, lors de la génération de la réponse optique (11), produisent un effet optique qui comprend une réfraction, une réflexion ou un effet diffractif de la lumière et identifie l'objet (2) de manière univoque, et
- la réponse optique (11) comprend une distribution d'intensité de l'ensemble du code optique et/ou des fronts d'onde d'une partie des éléments optiques (1).

2. Procédé selon la revendication 1, dans lequel, avant le polissage, un enlèvement de matière est effectué, de préférence à l'aide du laser d'usinage (3), afin d'introduire les éléments optiques (1) dans la surface (21).

3. Procédé selon la revendication 1 ou 2, dans lequel les formes des éléments optiques (1) sont prédéfinies de telle sorte que les éléments optiques (1) génèrent, en tant que réponse optique (11), un motif de réflexion sur le côté de l'objet (2) tourné vers la source lumineuse (4).

4. Procédé selon la revendication 1 ou 2, dans lequel les formes des éléments optiques (1) sont prédéfinies de telle sorte que les éléments optiques (1) génèrent, en tant que réponse optique (11), un motif de réfraction sur le côté de l'objet (2) opposé à la source lumineuse (4).

5. Procédé selon l'une quelconque des revendications 1 à 4, dans lequel la surface (21) est rendue rugueuse avant l'introduction des éléments optiques (1).

6. Procédé selon l'une quelconque des revendications 1 à 5, dans lequel une couche protectrice (5) est appliquée sur les éléments optiques (1) après leur polissage.

7. Procédé selon l'une quelconque des revendications 1 à 6, dans lequel, après le polissage des éléments optiques (1) ou après l'application d'une couche protectrice (5), la réponse optique (11) des éléments optiques (1) est enregistrée et stockée en étant associée à l'objet (2).

8. Code optique pour l'identification d'objets (2), comprenant
- des éléments optiques (1) qui sont introduits, selon une disposition prédéfinie, dans une surface (21) de l'objet (2),
- les formes des éléments optiques (1) étant prédéfinies de telle sorte que, lorsqu'ils sont éclairés par une lumière émise par au moins une source lumineuse (4) avec au moins une longueur d'onde prédéfinie et à une distance prédéfinie, ils réfractent ou réfléchissent la lumière et génèrent ainsi une réponse optique (11), **caractérisé en ce que**
- les éléments optiques (1) sont polis de manière à présenter chacun une rugosité de surface réduite par rapport à la rugosité de surface de la surface environnante (21),
- les éléments optiques, lors de la génération de la réponse optique (11), produisent un effet optique qui comprend une réfraction, une réflexion ou un effet diffractif de la lumière et identifie l'objet (2) de manière univoque, et
- la réponse optique (11) comprend une distribution d'intensité de l'ensemble du code optique et/ou des fronts d'onde d'une partie des éléments optiques (1).

9. Code optique selon la revendication 8, dans lequel les éléments optiques (1) sont disposés selon une grille et sont conçus pour réfléchir la lumière émise par la source lumineuse (4).

10. Code optique selon la revendication 8 ou 9, dans lequel les éléments optiques (1) sont des structures de focalisation.

11. Code optique selon la revendication 10, dans lequel les éléments optiques (1) présentent un plan focal commun.

12. Code optique selon la revendication 10, dans lequel les éléments optiques (1) présentent des plans focaux différents les uns des autres.

13. Code optique selon l'une quelconque des revendications 8 à 12, dans lequel les éléments optiques (1) sont des microstructures d'une dimension inférieure à 1 mm.

14. Procédé de vérification d'un code optique, dans lequel
- des éléments optiques (1) qui sont introduits dans un objet (2) selon une disposition prédéfinie en tant que partie d'un code optique, sont éclairés par une lumière émise par au moins une source lumineuse (4) avec au moins une longueur d'onde prédéfinie et à une distance prédéfinie, la lumière étant réfractée ou réfléchie par les éléments optiques (1), générant ainsi une réponse optique (11),
- la réponse optique (11) est détectée par au moins un capteur (6),
- la réponse optique (11) est évaluée à l'aide d'une unité d'évaluation et de mémorisation, une signature (7) associée à l'objet (2) étant générée et la signature (7) étant comparée à une signature de référence associée à l'objet (2), et
- si la signature (7) présente une similitude suffisante avec la signature de référence, le code optique est vérifié, **caractérisé en ce que**
- les éléments optiques (1) présentent chacun une rugosité de surface réduite par rapport à une rugosité de surface de la surface environnante (21),
- les éléments optiques, lors de la génération de la réponse optique (11), produisent un effet optique qui comprend une réfraction, une réflexion ou un effet diffractif de la lumière, et
- lors de la détection de la réponse optique (11) à au moins une distance prédéfinie, une distribution d'intensité de l'ensemble du code optique et/ou des fronts d'onde d'une partie des éléments optiques (1) est détectée.

15. Procédé selon la revendication 14, dans lequel les fronts d'onde d'éléments optiques individuels (1) sont détectés et un capteur Shack-Hartmann est utilisé comme au moins un capteur (6).

16. Procédé selon la revendication 14, dans lequel les éléments optiques (1) sont disposés selon une grille, une distribution d'intensité de l'ensemble du code optique est détectée et les positions focales des différents éléments optiques (1) sont évaluées.

17. Procédé selon la revendication 16, dans lequel N sous-ensembles d'éléments optiques (1) sont formés avec N plans focaux, la même valeur est attribuée aux éléments optiques (1) de chaque sous-ensemble et la signature (7) est générée à partir des sous-ensembles.

18. Procédé selon la revendication 16 ou 17, dans lequel la détection de la réponse optique (11) s'effectue uniquement dans un plan prédéfini et dans lequel seule la réponse optique (11) d'éléments optiques (1) dont le foyer se trouve dans le plan prédéfini est prise en compte lors de l'évaluation.

19. Procédé selon l'une quelconque des revendications 14 à 18, dans lequel, avant la détection de la réponse optique (11), un filtre optique (8) est appliqué à la réponse optique (11).

20. Procédé selon l'une quelconque des revendications 14 à 19, dans lequel le code optique est éclairé avec différentes longueurs d'onde et la réponse optique (11) se compose de plusieurs parties qui sont chacune associées à une longueur d'onde.
